# EUROPEAN PATENT SPECIFICATION

(11) **EP 3 270 046 B1**
(45) Date of publication and mention of the grant of the patent: **03.10.2018**
(21) Application number: 16305920.7
(22) Date of filing: 15.07.2016
(51) Int. Cl.: F21V 8/00, H01H 9/18, H01R 13/717, H02G 3/12, H02G 3/14

(54) **LIGHTING DEVICE TO BE INSTALLED ONTO A FRAME**
BELEUCHTUNGSVORRICHTUNG ZUM EINBAU AUF EINEM RAHMEN
DISPOSITIF D'ÉCLAIRAGE DESTINÉ À ÊTRE INSTALLÉ SUR UN CHÂSSIS

(43) Date of publication of application: 17.01.2018
(73) Proprietor: Berker GmbH & Co. KG, 58579 Schalksmühle (DE)
(72) Inventor: BARBERO, Andrea, 25086 REZZATO (IT); PADERNO, Alberto, 25010 MONTIRONE (IT); ALBERTI, Luigi, 25025 MANERBIO (IT); ROMAGNOLI, Roberto, 25018 MONTICHIARI (IT)
(74) Representative: Nuss, Laurent

(56) References cited:
- WO-A1-2015/006302
- DE-A1-102008 029 239
- FR-A1- 2 979 412
- US-A1- 2004 218 379
- US-A1- 2014 247 619
- US-A1- 2016 116 660

## Description

The present invention relates to the field of lighting device and more particularly to the field of lighting device embedded in electrical wall device.

The finding of an electrical wall device like a power plug or socket or of an electrical switch in the dark is not easy. To overcome this situation, some switches have been developed to embed a low-power electrical bulb. This bulb is positioned behind the covering structure of the switch, the covering structure of the switch being made of translucent materiel or with a thickness thin enough to allow the light of the low-power bulb to be visible for a user.

However, because of the particular structure of the bulb, the positioning of the light in the electrical wall device is restricted. The size and the volume of the bulb limit its position in the internal structure of the electrical wall device. Indeed, to avoid or limit the alteration of the thickness of the electrical wall device, this bulb can only be positioned in particular spaces of the electrical wall device. Further, by using usual bulb, the provided light only correspond to a single spotlight through the covering structure of the electrical wall device.

The document DE 10 2008 029 239 A1 discloses an electrical device comprising a cover plate comprising multiple labeling areas which are illuminated by a LED-light source. Polymer fiber-optic cables are fastened on a rear side of the cover plate. The light source irradiates light into an end of each fiber-optic cable. A solid light guiding body is assigned to the labeling areas. Another end of each cable flows into a front side recess of the labeling areas to radiate light into a front surface of the light guiding body.

The present invention seeks to overcome these disadvantages by proposing a lighting device configured to be easily embedded in electrical wall device, like for example standard wall device, and able to diffuse light on longer portion of the electrical device, the diffusing length of the lighting device being easily defined or modified by the installer of the wall device.

For this purpose, the invention relates to a lighting device suitable to be installed onto a frame, the frame being an element of an electrical wall device or of a wall electrical interface, wherein the device comprises:
- at least one light source with a unique LED (Light-Emitting Diode) per each light source,
- at least one optical fiber having at least one extremity connected to the at least one light source,
- at least one fixation item mounted or set onto one portion of the optical fiber,
characterized in that the frame is able to cooperate with a plate covering one face of the frame,
in that the at least one optical fiber is a diffusing optical fiber,
and in that the at least one fixation item has a structure able to cooperate with at least one portion of the frame.

The invention also relates to a frame being element of an electrical wall device or of a wall electrical interface, incorporating a lighting device according to the invention, characterized in that the light source of the lighting device is connected to an electrical source, the first purpose of this electrical source being different from the supply of the light source of the lighting device.

The invention also relates to a method of positioning a diffusing optical fiber of the lighting device according to the invention onto a frame according to the invention through at least one fixation item comprising the steps of:
associating the diffusing optical fiber with at least one fixation item and mounting or setting this fixation item onto the structure of the frame, the fixation item cooperating with the frame through complementary structural interfaces, like for example a male-female cooperation.

The invention will be better understood from the following description which refers to at least one preferred embodiment, given by way of non-limiting example, and explained with reference to the accompanying drawings, wherein:

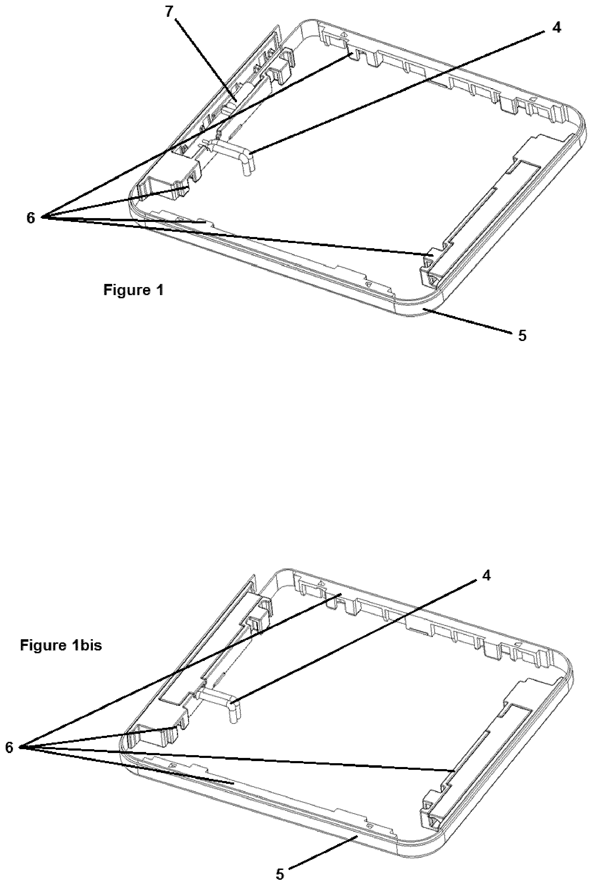

- Figure 1 is a schematic representation of a lighting device of the invention arranged to form a closed loop,
- Figure Ibis is a schematic representation of a lighting device of the invention wherein the fixation item lodging the light source is closed by a cover,

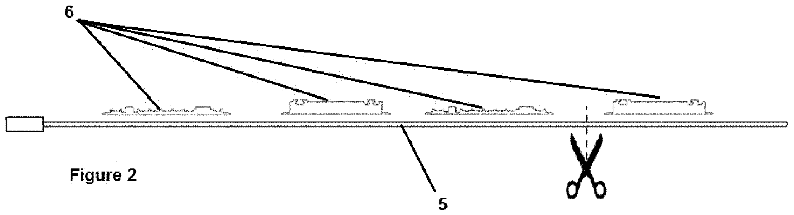

- Figure 2 is a schematic representation of a part of a lighting device of the invention,

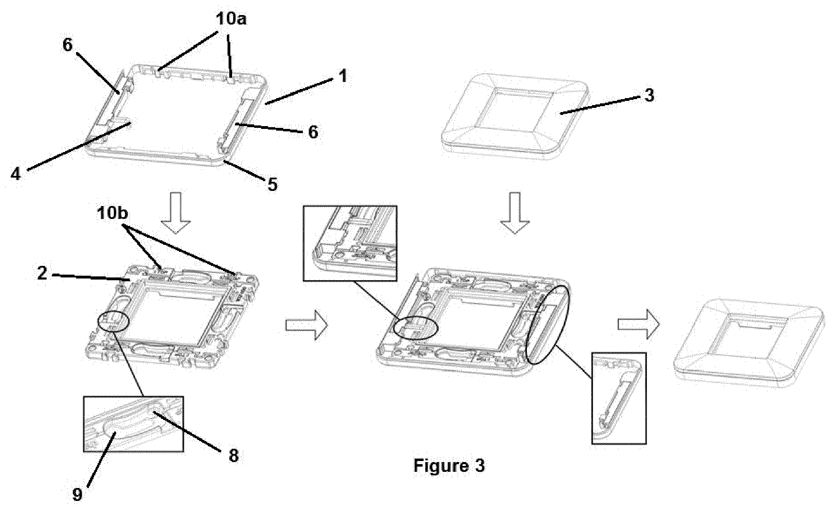

- Figure 3 is schematic representation of an example of the assembling of frame with the lighting device of the invention.

The invention relates to a lighting device 1 to be installed onto a frame 2, the frame 2 being able to cooperate with a plate 3 covering one face of the frame 2, characterized in that the device 1 comprises:
- at least one light source 4 with a unique LED (Light-Emitting Diode) per each light source 4,
- at least one diffusing optical fiber 5 having at least one extremity connected to the light source 4,
- at least one fixation item 6 mounted or set onto one portion of the optical fiber 5, the fixation item 6 having a structure able to cooperate with at least one portion of the frame 2.

According to the invention, the frame 2 and the cooperating cover plate 3 are elements of an electrical wall device or of a wall electrical interface.

According to another preferred but not limitative construction of the invention, the frame 2 and the cooperating cover plate 3 are standard elements of standard devices.

The use of a LED (Light-Emitting Diode) as a light source 4 allow to take advantage of the low size of the light source able to provide a power enough light. The led makes the light source able to be embedded into shrink spaces of the frame 2. Further, the use of LED provides the possibility to easily change the colors and the brightness level of light by simply exchanging the light source 4.

According to a particular but not limitative construction of the lighting device 1 of the invention, the optical diffusive fiber 5 is mechanically and optically connected to the light source 7.

Because of the use of a diffusing optical fiber 5 to transmit the light emitted by the light source 4, the lighting device 1 of the invention is able to provide a longer diffusion of light than by the prior devices. Another advantage of the diffusing optical fiber 5 is that its combination with the particular light source 4 makes the diffusion of light not dependent from the position of the light source with respect to the structure onto which the lighting device 1 is installed. The diffusion of light by the diffusing optical fiber 5 is carried out on different portions from the position of the light source 4. Further, the use of an optical fiber 5 provides a homogeneous lighting over the structure of electrical device where the fiber 5 is positioned.

The diffusing optical fiber 5 is positioned onto the frame 2 through at least one fixation item 6. The diffusing optical fiber 5 is associated with at least one fixation item 6 and this fixation item 6 is mounted or set onto the structure the frame 2. According to a particular but not limitative construction of the invention, the fixation item 6 cooperates with the frame 2 through complementary structural interfaces 10a and 10b, like for example a male-female cooperation.

According to a specificity of the cooperation of the fixation item 6 with the frame 2, the length of the fixation item 6 and the particularity of its interface is adapted depending on the length or the portion of the frame 2 destined to receive the fixation item 6.

According to a particular construction of the invention, the lighting device 1 is characterized in that the diffusing optical fiber 5 with associated fixation item 6 is adjustable to at least one length of the frame 2. The length of the diffusing optical fiber 5 connected to the light source 4 can be adjusted by the installer to correspond to the desired length of light diffusion to be installed onto the frame 2. This adjustment of the length of the diffusing optical fiber 5 can be carried out by cutting the diffusing optical fiber 5 between two successive fixation items 6 to the desired length.

According to a specificity of the length adjustment, the mounting of the lighting device 1 onto a combination of several frames 2 may need a cutting adjustment of the length of the diffusing optical fiber 5 to match with at least one length of the several frames combination.

According to a specificity of this particularity, the diffusing optical fiber 5 is associated with several fixation items 6 successively positioned and spaced along the length of the diffusing optical fiber 5. The length of the diffusing optical fiber 5 can be adjusted by the installer by cutting the diffusing optical fiber 5 between two successive fixation items 6.

According to another particular but not limitative construction of the invention, the fixation item 6 is made by a long shape structure adapted to be associated by at least one side of its length with a portion of the diffusing optical fiber 5. Another side of the fixation item 6 forming the interface adapted to cooperate with the frame 2.

According to another particular but not limitative construction of the invention, the fixation items 6 are mounted or set on particular portions of the diffusive optical fiber 5 making the optical fiber 5 self-supported in the therebetween portions. This arrangement of the fixation items 6 on the optical fiber 5 takes advantage of the rigidity of the optical fiber 5 to keep the positioning of the optical fiber 5 with respect to the frame 2 whereon the fixation items are mounted.

According to another particular but not limitative construction of the invention, the lighting device 1 is characterized in that at least one fixation item 6 mounted or set onto one distal portion of the optical fiber 5 with respect to the light source 4, comprises a structure adapted to interact with the light source 4 or a proximal portion of the optical fiber 5 to make a closed loop with the optical fiber 5. Such arrangement of the optical fiber 5 provides a circular light diffusion adapted to be mounted or set on each side of the frame 2 or around a particular surface of the frame 2. Moreover, this arrangement provides the connection of the two extremities of the optical fiber 6 by the mounting or the setting of these extremities with one single fixation item 6. Further, when the length of the optical fiber 5 is optimally adapted to the circular length of the frame 2, the mounting or the setting of the extremities of the optical fiber 6 with one single fixation item 6 can take advantage of the rigidity of the optical fiber 5 to optimize the mounting or the setting of the optical fiber 5 onto the frame 6 by using low number of fixation item 6.

According to a specificity of this particularity, the fixation item 6 mounted or set onto one distal portion of the optical fiber 5 comprises a hollow portion making a lodge 7 for the insertion of the light source 4. According to this arrangement, the light source 4 is used to close the loop made by the optical fiber 5.

According to a more particular feature of this specificity, the fixation item 6 comprising the lodge 7 for the insertion of the light source 4 is made by two complementary elements forming a case or a box designed to receive the light source 4 once joined together.

According to another particular but not limitative construction of the invention, at least one fixation item 6 has a thickness corresponding to the width of the optical fiber 5. Such construction of the fixation item 6 takes advantage of the thinness of the optical fiber 5 and avoid a lighting device 1 with a too important thickness to obstruct the mounting of the cover plate 3 once the lighting device 1 set on the frame 2.

The invention also relates to a frame 2 incorporating a lighting device 1 according to the invention, characterized in that the light source 4 of the lighting device 1 is connected to an electrical source, the first purpose of this electrical source being different from the supply of the light source 4 of the lighting device 1. Although the lighting device 1 of the invention could be connected to its own embedded electrical source like a battery, the preferred construction of the invention takes advantage of the electrical source used to supply the electrical wall device or the wall electrical interface. The connection of the light source 4 to the electrical source is realized by a destined interface of the light source 4. The connection of this interface is operated by the installer when the fixation items 6 of the lighting device 1 are mounted or set onto the frame 2. According to a preferred but not limitative construction of this arrangement, the frame 2 comprises a hollow portion 8 for the positioning of the light source 4 and the connection of the light source 4 with the electrical source. This hollow portion 8 is arranged to form a hole 8 through the structure of the frame 2 and permit the cabling of the light source 4 positioned on a first face of the frame 2 with the electrical source set on the other face of the frame 2. Depending on the mounting position of the fixation items 6 on the frame 2, the hollow portion 8 of the frame 2 designed for the connection of the light source 4 is adapted to be close to the hollow portion 7 of the fixation item 6 designed to lodge the light source 4.

According to a preferred but not limitative construction of the frame 2 of the invention, the hollow portion 8 forming a hole 8 through the structure of the frame 2 is positioned in a same thin portion of the frame 2 having a hollow portion 9 designed to receive a means for the fixation of the frame 2 on a wall.

According to a particular construction of the frame 2 of the invention, the frame 2 being able to cooperate with a plate 3 covering one face of the frame 2, the frame 2 comprises at least one adapted interface 10b to cooperate with at least one fixation item 6 of the lighting device 1 to position the lighting device 1 mounted or set between the frame 2 and the covering plate 3. As above explained, this cooperation may be realized by complementary structural interfaces 10a and 10b, like a male-female, with the frame 2 structure making the fixation item 6 cooperating with the frame 2 through this adapted interface.

According to another particular but not limitative construction of the invention, at least one adapted interface is positioned on the peripheral edge of the frame 2. According to this arrangement, the fixation items 6 mounted on the peripheral edges of the frame 2 are positioned in the same plane as the frame 2.

According to a specificity to realize this particularity of the invention, at least one fixation item 6 of the lighting device 1 and/or the diffusing optical fiber 5 is less large or thick than the thickness of the frame 2. According to this arrangement, the fixation item 6 is formed by a thin structure with a thickness similar to the thickness of the frame 2.

It can be noticed that depending on the mounting position of the fixation items 6 on the frame 2, the plate 3 may be larger than the frame 2 to cover the frame 2 and the fixation items 6 mounted onto. When the fixation items 6 are mounted on the peripheral edge of the frame 2, the covering plate 3 has a width at least sufficient to cover the frame 2 with the fixations items 6 mounted onto.

## Claims

1. Lighting device (1) suitable to be installed onto a frame (2), the frame (2) being an element of an electrical wall device or of a wall electrical interface, wherein the lighting device (1) comprises:
- at least one light source (4) with a unique LED (Light-Emitting Diode) per each light source (4),
- at least one optical fiber (5) having at least one extremity connected to the at least one light source (4),
- at least one fixation item (6) mounted or set onto one portion of the optical fiber (5),
**characterized in that** the frame (2) is able to cooperate with a plate (3) covering one face of the frame (2),
**in that** the at least one optical fiber is a diffusing optical fiber (5),
and **in that** the at least one fixation item (6) has a structure able to cooperate with at least one portion of the frame (2).

2. Lighting device (1) suitable to be installed onto a frame (2) according to claim 1, **characterized in that** at least one of said at least one fixation item (6) is mounted or set onto one distal portion of the at least one optical fiber (5) with respect to the at least one light source (4), and comprises a structure adapted to interact with the at least one light source (4) or a proximal portion of the at least one optical fiber (5), to make a closed loop with the at least one optical fiber (5).

3. Lighting device (1) according to claim 2, **characterized in that** the at least one fixation item (6) mounted or set onto one distal portion of the at least one optical fiber (5) comprises a hollow portion making a lodge (7) for the insertion of the at least one light source (4).

4. Lighting device (1) according to at least one of the previous claims, **characterized in that** the at least one fixation item (6) has a thickness corresponding to the width of the at least one optical fiber (5).

5. Lighting device (1) according to at least one of the previous claims, **characterized in that** the fixation items (6) are mounted or set on particular portions of the at least one diffusive optical fiber (5) making the at least one optical fiber (5) self-supported in the therebetween portions.

6. Lighting device (1) suitable to be installed onto a frame (2) according to one of the previous claims, where the at least one diffusive optical fiber (5) is mechanically and optically connected to the at least one light source (4).

7. Frame (2) being element of an electrical wall device or of a wall electrical interface, incorporating a lighting device (1) according to one of the claims 1 to 6, **characterized in that** the at least one light source (4) of the lighting device (1) is connected to an electrical source, the first purpose of this electrical source being different from the supply of the at least one light source (4) of the lighting device (1).

8. Frame (2) according to claim 7, **characterized in that** the frame (2) comprises a hollow portion (8) for the positioning of the at least one light source (4) and the connection of the at least one light source (4) with the electrical source.

9. Frame (2) according to claim 7, wherein the plate (3) is an element of an electrical wall device or of a wall electrical interface, the frame (2) comprises at least one adapted interface (10b) to cooperate with the at least one fixation item (6) of the lighting device (1) to position the lighting device (1) mounted or set between the frame (2) and the covering plate (3).

10. Frame (2) according to claim 8, **characterized in that** at least one adapted interface is positioned on a peripheral edge of the frame (2).

11. Frame (2) according to at least one of the claims 7 to 9, **characterized in that** the at least one fixation item (6) of the lighting device (1) and/or the at least one diffusing optical fiber (5) is less large or thick than a thickness of the frame (2).

12. Method of positioning a diffusing optical fiber (5) of the lighting device (1) according to claims 1 to 6 onto a frame (2) according to claims 7 to 11 through the at least one fixation item (6) comprising the steps of:
associating the at least one diffusing optical fiber (5) with the at least one fixation item (6) and mounting or setting this at least one fixation item (6) onto the structure of the frame (2), the at least one fixation item (6) cooperating with the frame (2) through complementary structural interfaces (10a and 10b), like for example a male-female cooperation.

13. Method according to claim 12, **characterized in that** the method comprises a step of adapting the length of the at least one fixation item (6) and the particularity of its interface depending on the length or the portion of the frame (2) destined to receive the at least one fixation item (6).

14. Method according to claim 12, **characterized in that** the at least one diffusing optical fiber (5) with the associated at least one fixation item (6) is adjustable to at least one length of the frame (2) and that the method comprises a step of length adjustment of the at least one diffusing optical fiber (5) connected to the at least one light source (4) to correspond to a desired length of light diffusion to be installed onto the frame (2) by an installer.

15. Method according to claim 14, **characterized in that** the step of length adjustment of the at least one diffusing optical fiber (5) is carried out by cutting the at least one diffusing optical fiber (5) between two successive fixation items of said at least one fixation item (6) to the desired length.

16. Method according to one of claims 14 to 15, **characterized in that** in the step of the length adjustment, the mounting of the lighting device (1) onto a combination of several frames (2) needs a cutting adjustment of the length of the diffusing optical fiber (5) to match with at least one length of the several frames combination.

## Patentansprüche

1. Beleuchtungsvorrichtung (1), die zum Einbau auf einem Rahmen (2) geeignet ist, wobei der Rahmen (2) ein Element einer elektrischen Wandvorrichtung oder einer elektrischen Wand-Schnittstelle ist, wobei die Beleuchtungsvorrichtung (1) aufweist:
- mindestens eine Lichtquelle (4) mit einer spezifischen LED (Leuchtdiode) für jede Lichtquelle (4),
- mindestens eine optische Faser (5), bei der mindestens ein Ende mit der mindestens einen Lichtquelle (4) verbunden ist,
- mindestens ein Befestigungselement (6), das auf einem Abschnitt der optischen Faser (5) befestigt oder aufgesetzt ist,
**dadurch gekennzeichnet, dass**
der Rahmen (2) mit einer Platte (3) zusammenwirken kann, die eine Seite des Rahmens (2) bedeckt,
dass die mindestens eine optische Faser eine lichtstreuende optische Faser (5) ist,
und dass das mindestens eine Befestigungselement (6) eine Struktur hat, die mit mindestens einem Abschnitt des Rahmens (2) zusammenwirken kann.

2. Beleuchtungsvorrichtung (1), die zum Einbau auf einem Rahmen (2) geeignet ist, nach Anspruch 1, **dadurch gekennzeichnet, dass** mindestens eines des mindestens einen Befestigungselements (6) auf einem in Bezug auf die mindestens eine Lichtquelle (4) distalen Abschnitt der mindestens einen optischen Faser (5) befestigt oder aufgesetzt ist und einen Aufbau aufweist, der geeignet ist, mit der mindestens einen Lichtquelle (4) oder einem proximalen Abschnitt der mindestens einen optischen Faser (5) zusammenzuwirken, um mit der mindestens einen optischen Faser (5) einen geschlossenen Kreis zu bilden.

3. Beleuchtungsvorrichtung (1) nach Anspruch 2, **dadurch gekennzeichnet, dass** das mindestens eine Befestigungselement (6), das an einem distalen Abschnitt der mindestens einen optischen Faser (5) befestigt oder aufgesetzt ist, einen hohlen Abschnitt aufweist, der eine Aufnahme (7) zum Einsatz der mindestens einen Lichtquelle (4) bildet.

4. Beleuchtungsvorrichtung (1) nach mindestens einem der vorhergehenden Ansprüche, **dadurch gekennzeichnet, dass** das mindestens eine Befestigungselement (6) eine Dicke entsprechend der Breite der mindestens einen optischen Faser (5) hat.

5. Beleuchtungsvorrichtung (1) nach mindestens einem der vorhergehenden Ansprüche, **dadurch gekennzeichnet, dass** die Befestigungselemente (6) an bestimmten Abschnitten der mindestens einen lichtstreuenden optischen Faser (5) befestigt oder aufgesetzt sind und dadurch bewirken, dass die mindestens eine optische Faser (5) in den dazwischenliegenden Abschnitten selbsttragend ist.

6. Beleuchtungsvorrichtung (1), die zum Einbau auf einem Rahmen (2) geeignet ist nach einem der vorhergehenden Ansprüche, wobei die mindestens eine lichtstreuende optische Faser (5) mechanisch und optisch mit der mindestens einen Lichtquelle (4) verbunden ist.

7. Rahmen (2), der ein Element einer elektrischen Wandvorrichtung oder einer elektrischen Wand-Schnittstelle ist, beinhaltend eine Beleuchtungsvorrichtung (1) nach einem der Ansprüche 1 bis 6, **dadurch gekennzeichnet, dass** die mindestens eine Lichtquelle (4) der Beleuchtungsvorrichtung (1) mit einer Stromquelle verbunden ist, wobei der Hauptzweck dieser Stromquelle nicht in der Versorgung der mindestens einen Lichtquelle (4) der Beleuchtungsvorrichtung (1) besteht.

8. Rahmen (2) nach Anspruch 7, **dadurch gekennzeichnet, dass** der Rahmen (2) einen hohlen Abschnitt (8) zum Positionieren der mindestens einen Lichtquelle (4) und Verbinden der mindestens einen Lichtquelle (4) mit der Stromquelle aufweist.

9. Rahmen (2) nach Anspruch 7, wobei die Platte (3) ein Element einer elektrischen Wandvorrichtung oder einer elektrischen Wand-Schnittstelle ist, wobei der Rahmen (2) mindestens eine geeignete Schnittstelle (10b) zum Zusammenwirken mit dem mindestens einen Befestigungselement (6) der Beleuchtungsvorrichtung (1) aufweist, um die zwischen dem Rahmen (2) und der Abdeckplatte (3) befestigte oder aufgesetzte Beleuchtungsvorrichtung (1) zu positionieren.

10. Rahmen (2) nach Anspruch 8, **dadurch gekennzeichnet, dass** mindestens eine geeignete Schnittstelle an einem Umfangsrand des Rahmens (2) angeordnet ist.

11. Rahmen (2) nach mindestens einem der Ansprüche 7 bis 9, **dadurch gekennzeichnet, dass** das mindestens eine Befestigungselement (6) der Beleuchtungsvorrichtung (1) und/oder die mindestens eine lichtstreuende optische Faser (5) kleiner oder dünner als eine Dicke des Rahmens (2) ist.

12. Verfahren zum Positionieren einer lichtstreuenden optischen Faser (5) der Beleuchtungsvorrichtung (1) nach den Ansprüchen 1 bis 6 auf einem Rahmen (2) nach den Ansprüchen 7 bis 11 durch das mindestens eine Befestigungselement (6), umfassend folgende Schritte:
Zuordnen der mindestens einen lichtstreuenden optischen Faser (5) zu dem mindestens einen Befestigungselement (6) und Befestigen oder Setzen dieses mindestens einen Befestigungselements (6) auf die Struktur des Rahmens (2), wobei das mindestens eine Befestigungselement (6) mit dem Rahmen (2) über komplementäre Strukturschnittstellen (10a und 10b) zusammenwirkt, wie beispielsweise einem Zusammenwirken eines Steckers mit einer Buchse.

13. Verfahren nach Anspruch 12, **dadurch gekennzeichnet, dass** das Verfahren einen Schritt des Anpassens der Länge des mindestens einen Befestigungselements (6) und der Besonderheit seiner Schnittstelle aufweist, die von der Länge oder dem Abschnitt des Rahmens (2) abhängt, der das mindestens eine Befestigungselement (6) aufnehmen soll.

14. Verfahren nach Anspruch 12, **dadurch gekennzeichnet, dass** die mindestens eine lichtstreuende optische Faser (5) mit dem zugeordneten mindestens einen Befestigungselement (6) mindestens an eine Länge des Rahmens (2) angepasst werden kann und dass das Verfahren einen Schritt der Längenanpassung der mindestens einen lichtstreuenden optischen Faser (5) aufweist, die mit der mindestens einen Lichtquelle (4) verbunden ist, so dass sie einer gewünschten Länge der Lichtstreuung, die an dem Rahmen (2) von einem Monteur eingebaut werden soll, entspricht.

15. Verfahren nach Anspruch 14, **dadurch gekennzeichnet, dass** der Schritt der Längenanpassung der mindestens einen lichtstreuenden optischen Faser (5) ausgeführt wird durch Schneiden der mindestens einen lichtstreuenden optischen Faser (5) zwischen zwei aufeinander folgenden Befestigungselementen des mindestens einen Befestigungselements (6) auf die gewünschte Länge.

16. Verfahren nach einem der Ansprüche 14 bis 15, **dadurch gekennzeichnet, dass** in dem Schritt der Längenanpassung die Befestigung der Beleuchtungsvorrichtung (1) auf einer Kombination von mehreren Rahmen (2) eine Schnittanpassung der Länge der lichtstreuenden optischen Faser (5) erfordert, so dass sie mit mindestens einer Länge der Kombination von mehreren Rahmen übereinstimmt.

## Revendications

1. Dispositif d'éclairage (1) apte à être installé sur un cadre (2), le cadre (2) étant un élément d'un dispositif électrique mural ou d'une interface électrique murale, le dispositif d'éclairage (1) comprenant :
- au moins une source de lumière (4) avec une DEL (diode électroluminescente) unique pour chaque source de lumière (4),
- au moins une fibre optique (5) ayant au moins une extrémité connectée à ladite au moins une source lumineuse (4),
- au moins un élément de fixation (6) monté ou fixé sur une partie de la fibre optique (5),
**caractérisé en ce que**
le cadre (2) est apte à coopérer avec une plaque (3) recouvrant une face du cadre (2),
**en ce que** ladite au moins une fibre optique (5) est une fibre optique diffusante (5),
et **en ce que** ledit au moins un élément de fixation (6) a une structure apte à coopérer avec au moins une partie du cadre (2).

2. Dispositif d'éclairage (1) apte à être installé sur un cadre (2) selon la revendication 1, **caractérisé en ce qu'**au moins un desdits au moins un éléments de fixation (6) est monté ou fixé sur une partie distale de ladite au moins une fibre optique (5) par rapport à ladite au moins une source de lumière (4) et comprend une structure adaptée à interagir avec ladite au moins une source de lumière (4) ou une partie proximale de ladite au moins une fibre optique (5) pour former une boucle fermée avec ladite au moins une fibre optique (5).

3. Dispositif d'éclairage (1) selon la revendication 2, **caractérisé en ce que** ledit au moins un élément de fixation (6) monté ou fixé sur une partie distale de ladite au moins une fibre optique (5) comprend une partie creuse constituant un logement (7) pour l'insertion de ladite au moins une source de lumière (4).

4. Dispositif d'éclairage (1) selon au moins l'une des revendications précédentes, **caractérisé en ce que** ledit au moins un élément de fixation (6) a une épaisseur correspondant à la largeur de ladite au moins une fibre optique (5).

5. Dispositif d'éclairage (1) selon au moins l'une des revendications précédentes, **caractérisé en ce que** les éléments de fixation (6) sont montés ou fixés sur des parties particulières de ladite au moins une fibre optique diffusante (5) rendant ladite au moins une fibre optique (5) autoportée dans les parties situées entre eux.

6. Dispositif d'éclairage (1) apte à être installé sur un cadre (2) selon l'une des revendications précédentes, dans lequel ladite au moins une fibre optique diffusante (5) est connectée mécaniquement et optiquement à ladite au moins une source lumineuse (4).

7. Cadre (2) formant un élément d'un dispositif électrique mural ou d'une interface électrique murale, incorporant un dispositif d'éclairage (1) selon l'une des revendications 1 à 6, **caractérisé en ce que** ladite au moins une source lumineuse (4) du dispositif d'éclairage (1) est connectée à une source électrique, le premier but de cette source électrique étant différent de l'alimentation de ladite au moins une source lumineuse (4) du dispositif d'éclairage (1).

8. Cadre (2) selon la revendication 7, **caractérisé en ce que** le cadre (2) comprend une partie creuse (8) pour le positionnement de ladite au moins une source lumineuse (4) et la connexion de ladite au moins une source lumineuse (4) à la source électrique.

9. Cadre (2) selon la revendication 7, dans lequel la plaque (3) est un élément d'un dispositif électrique mural ou d'une interface électrique murale, le cadre (2) comprend au moins une interface (10b) adaptée à coopérer avec ledit au moins un élément de fixation (6) du dispositif d'éclairage (1) pour positionner le dispositif d'éclairage (1) monté ou fixé entre le cadre (2) et la plaque de recouvrement (3).

10. Cadre (2) selon la revendication 8, **caractérisé en ce qu'**au moins une interface adaptée est positionnée sur un bord périphérique du cadre (2).

11. Cadre (2) selon au moins l'une des revendications 7 à 9, **caractérisé en ce que** ledit au moins un élément de fixation (6) du dispositif d'éclairage (1) et/ou de ladite au moins une fibre optique diffusante (5) est moins grand ou épais qu'une épaisseur du cadre (2).

12. Procédé pour positionner une fibre optique diffusante (5) du dispositif d'éclairage (1) selon les revendications 1 à 6 sur un cadre (2) selon les revendications 7 à 11 au moyen dudit au moins un élément de fixation (6) comprenant les étapes consistant à :
associer ladite au moins une fibre optique diffusante (5) audit au moins un élément de fixation (6) et monter ou fixer cedit élément de fixation (6) sur la structure du cadre (2), ledit au moins un élément de fixation (6) coopérant avec le cadre (2) au moyen d'interfaces structurelles complémentaires (10a et 10b), comme par exemple une coopération mâle-femelle.

13. Procédé selon la revendication 12, **caractérisé en ce que** le procédé comprend une étape consistant à adapter la longueur dudit au moins un élément de fixation (6) et la particularité de son interface en fonction de la longueur ou de la partie du cadre (2) destinée à recevoir ledit au moins un élément de fixation (6).

14. Procédé selon la revendication 12, **caractérisé en ce que** ladite au moins une fibre optique diffusante (5) avec ledit au moins un élément de fixation (6) associé est réglable sur au moins une longueur du cadre (2) et **en ce que** le procédé comprend une étape de réglage de longueur de ladite au moins une fibre optique diffusante (5) connectée à ladite au moins une source de lumière (4) pour qu'elle corresponde à une longueur désirée de diffusion de lumière à installer sur le cadre (2) par un installateur.

15. Procédé selon la revendication 14, **caractérisé en ce que** l'étape de réglage de longueur de ladite au moins une fibre optique diffusante (5) est effectuée en coupant ladite au moins une fibre optique diffusante (5) entre deux éléments de fixation (6) successifs à la longueur désirée.

16. Procédé selon l'une des revendications 14 à 15, **caractérisé en ce que** lors de l'étape de réglage de longueur, le montage du dispositif d'éclairage (1) sur une combinaison de plusieurs cadres (2) nécessite un réglage par coupe de la longueur de la fibre optique diffusante (5) pour qu'elle corresponde à au moins une longueur de la combinaison de plusieurs cadres.
